# EUROPÄISCHE PATENTSCHRIFT

(11) **EP 4 177 401 B1**
(45) Veröffentlichungstag und Bekanntmachung des Hinweises auf die Patenterteilung: **12.06.2024**
(21) Anmeldenummer: 22201534.9
(22) Anmeldetag: 14.10.2022
(51) Int. Cl.: E01C 19/26

(54) **TANDEMWALZE ZUR VERDICHTUNG EINES BODENUNTERGRUNDES**
TANDEM ROLLER FOR COMPACTING A GROUND
ROULEAU TANDEM POUR COMPACTER UN SOL

(30) Priorität: 08.11.2021 DE 102021212546
(43) Veröffentlichungstag der Anmeldung: 10.05.2023
(73) Patentinhaber: BOMAG GmbH, 56154 Boppard (DE)
(72) Erfinder: Kreutz, Tobias, 56154 Boppard (DE); Klein, Thomas, 56154 Boppard (DE)
(74) Vertreter: Zimmermann & Partner Patentanwälte mbB

(56) Entgegenhaltungen:
- EP-A1- 2 775 032
- EP-A2- 0 935 025
- DE-A1- 19 813 474
- JP-A- H08 134 824

## Beschreibung

Die Erfindung betrifft eine Tandemwalze zur Verdichtung eines Bodenuntergrundes.

Tandemwalzen gehören zur Gruppe der selbstfahrenden Bodenverdichtungsmaschinen und werden beispielsweise im Straßenbau zur Asphaltsverdichtung eingesetzt. Derartige Bodenverdichtungsmaschinen sind beispielsweise in der EP 3092341 A1, der EP 0845557 A1, der DE 198 13 474 A1 und der DE 102019002442 A1 beschrieben Tandemwalzen umfassen eine in Bezug auf eine Fahrrichtung vordere Verdichtungsbandage und eine in Bezug auf die Fahrrichtung hintere Verdichtungsbandage. Bei einer Geradeausfahrt der Tandemwalze laufen die vordere und die hintere Verdichtungsbandage somit hintereinander. Richtungsangaben beziehen sich nachfolgend stets auf eine Geradeausfahrt der Tandemwalze. Es versteht sich, dass die vordere Verdichtungsbandage und die hintere Verdichtungsbandage für Lenkbewegungen der Tandemwalze lenkbar sind. Dazu kann die Tandemwalze als drehschemelgelenkte Tandemwalze oder als knickgelenkte Tandemwalze ausgebildet sein. Die Besonderheiten drehschemelgelenkter Tandemwalzen sind in der EP0935024A2 beschrieben. Die für den Fahr- und Arbeitsbetrieb erforderliche Antriebsenergie wird durch einen Antriebsmotor, beispielsweise einen Verbrennungs- oder Elektromotor, bereitgestellt.

Die vordere und/oder hintere Bandage kann bei Tandemwalzen als geteilte Bandage ausgebildet sein. Es ist auch bekannt, eine der Verdichtungsbandagen durch einen Gummiradsatz mit wenigstens 3 koaxial zueinander angeordneten Gummirädern zu ersetzen (sogenannte Kombiwalzen). Im Innenraum der vorderen und/oder hinteren Bandage können Erregereinrichtungen angeordnet sein, um die mit der Tandemwalze erreichbare Verdichtungswirkung zu erhöhen. Derartige Erregereinrichtungen sind üblicherweise so genannte Unwuchterreger.

Die vordere und die hintere Verdichtungsbandage tragen einen Maschinenrahmen der Tandemwalze, der insbesondere die wesentliche Tragstruktur bildet. Am Maschinenrahmen sind die vordere und die hintere Verdichtungsbandage jeweils um eine horizontal und quer zur Vorwärtsrichtung verlaufende Rotationsachse rotierbar gelagert. In eine Fahrrichtung gesehen zwischen den beiden Verdichtungsbandagen ist ferner ein Fahrstand angeordnet, von dem aus der Bediener die Tandemwalze im Fahr- und Arbeitsbetrieb bedienen kann. Der Fahrstand kann als Fahrerkabine ausgebildet sein, insbesondere umfassend zwei einander gegenüberliegend angeordnete Seitenzugangstüren, so dass der Bediener von beiden Seiten (bezüglich einer Fahrrichtung rechts oder links) in den Innenraum der Fahrerkabine gelangen kann. Die Seitenzugangstüren sind zwischen einer die Fahrerkabine verschließenden Schließstellung und einer den Durchtritt durch die von der Seitenzugangstür verschließbaren Kabinenöffnung ermöglichenden Offenstellung verstellbar. Die Seitenzugangstüren umfassen ferner häufig jeweils wenigstens ein Seitenfenster, welches Teil der Zugangstür ist und an der jeweiligen Seitenzugangstür zwischen einer geöffneten und einer geschlossenen Fensterposition verstellbar ist. Eine solche Anordnung ist beispielsweise in der EP3468820A1 beschrieben.

Im praktischen Arbeitseinsatz werden solche Bodenverdichtungsmaschinen häufig reversierend betrieben, d.h. die aktuelle Fahrrichtung der Tandemwalze wird vom Fahrer regelmäßig umgekehrt, um beispielsweise mehrfach das gleiche Bodenareal überfahren zu können und/oder ein definiertes Bodenareal systematisch, beispielsweise anhand eines Walzplans, abfahren zu können. Nachstehend bezeichnet eine Vorwärtsfahrt, wenn sich die Tandemwalze vom Fahrstand aus in Richtung der vorderen Verdichtungsbandage bewegt. Eine Rückwärtsfahrt bezeichnet dagegen eine der Vorwärtsfahrt entgegengesetzte Richtung. Die Fahrrichtung bezeichnet diejenige Bewegungsrichtung, in die sich die Tandemwalze gerade bewegt. Um in Anbetracht dieses Reversierbetriebes den Bedienkomfort für den Fahrer zu erhöhen, ist es bereits bekannt, den Fahrersitzes derart drehbar auszugestalten, dass der im Fahrstand befindliche Bediener von sich ausgehend jeweils geradeaus sowohl bei Rückwärtsfahrt als auch bei Vorwärtsfahrt aus dem Fahrstand heraus blicken kann. Dazu ist es bekannt, den Fahrersitzes selbst und/oder eine Lagerkonsole des Fahrersitzes im Fahrstandboden um eine vertikale Achse drehbar auszugestalten, damit der Fahrer von sich aus gesehen durch entsprechendes Drehen des Fahrersitzes sowohl bei Rückwärtsfahrt als auch bei Vorwärtsfahrt jeweils in Fahrtrichtung von ihm aus nach vorn blicken kann Eine solche Einrichtung ist beispielsweise in der EP0935025A2 offenbart. Der Fahrersitz kann ferner eine Bedienkonsole umfassen, insbesondere umfassend eine Armauflage, die ein oder mehrere Bedieneinrichtungen, beispielsweise zum Lenken der Tandemwalze, aufweisen kann. Die Armlehne kann mit dem Fahrersitz zusammen verstellbar und/oder drehbar sein.

Es treten beim Betrieb von Tandemwalzen häufig Einsatzsituationen auf, in denen der Fahrer die Maschine sehr präzise an beispielsweise einer in Fahrrichtung verlaufenden längserstreckten Kante entlang führen muss. Eine solche Einsatzsituation liegt beispielsweise dann vor, wenn die Tandemwalze bis zum Rand einer Asphaltmatte und/oder entlang eines Rinn- oder Bordsteins fahren soll, ohne auf diesen aufzufahren und dadurch Beschädigungen des Rinn- oder Bordsteins auszulösen. Die Herausforderung für den Bediener der Tandemwalze liegt dann darin, die jeweils in Fahrrichtung vor ihm liegende Verdichtungsbandage mit ihrer Stirnseite möglichst nah an der den zu verdichtenden Bodenbereich zur Seite abgrenzenden Kante entlang zu führen, diese Kante dabei aber sicher keinesfalls zu überfahren. Insbesondere bei großen und schweren Tandemwalzen, vorliegend beispielsweise mit einem Maschinengewicht von größer 5t, kann die Sicht zur Stirnseite der Verdichtungsbandage vom Fahrstand aus schwierig und durch Maschinenteile verdeckt sein. Eine ersten Verbesserung insbesondere für diese Betriebssituationen wurde für Tandemwalzen dadurch erreicht, dass der Fahrersitz horizontal und quer zur Fahrrichtung der Tandemwalze von der Mitte des Fahrstandes aus zur rechten und zur linken Seite verstellbar, insbesondere verschiebbar, ausgebildet sein kann, wie beispielsweise in der EP1961607A1 offenbart. Die Mitte des Fahrstandes bezeichnet eine Position des Fahrersitzes in der Mitte der maximalen Erstreckung des Fahrstandes in einer horizontalen Ebene quer zur Fahrrichtung. Von dieser Mittellage des Fahrersitzes kann dieser bei Tandemwalzen häufig zur rechten und zur linken Seite verstellbar sein, insbesondere verschiebbar. Häufig wird hierzu auf praktisch stufenlos verstellbare Verstelleinrichtungen zurückgegriffen, so dass der Bediener innerhalb eines Verstellbereiches des Fahrersitzes mehr oder weniger frei wählen kann, in welcher Verschiebeposition des Fahrersitzes er diesen arretieren und die Tandemwalze betreiben möchte. Auf diese Weise ist es für den Fahrer möglich, seine Sichtposition innerhalb des Fahrstandes zu derjenigen Seite der Tandemwalze zu verschieben, an der er die Tandemwalze entlang eines Hindernisses mit der Stirnseite der jeweiligen Verdichtungsbandage führen möchte.

Zur objektiven Definition der für einen im Fahrersitzes sitzenden Fahrer vorliegenden Blickverhältnisse wird im Rahmen dieser Erfindung auf den Sitzindexpunkt SIP gemäß der Norm EN ISO 5353 Bezug genommen, der nach den Vorgaben dieser Norm eindeutig bestimmbar ist. Einzelheiten hierzu sind in der Norm angegeben, auf die hiermit Bezug genommen wird, insbesondere die darin enthaltenen Definitionen zum Sitzindexpunkt und den darin angegebenen Möglichkeiten zur Bestimmung des Sitzindexpunktes. Ausgehend vom Sitzindexpunkt SIP wird der Augenpunkt AP bestimmt bzw. durch diesen definiert, der sich bevorzugt 680 mm vertikal über dem Sitzindexpunkt SIP befindet. Dies ist in der Norm ISO 5006 2017-04 entsprechend definiert, auf die im nachfolgenden ebenfalls Bezug genommen wird. Es wird davon ausgegangen, dass sich die Augen eines durchschnittlichen Bedieners, der auf dem Fahrersitz sitzt, im Bereich des Augenpunkts AP befinden, beispielsweise derart, dass der Augenpunkt AP zwischen den Augen des Bedieners liegt. Der Augenpunkt AP kann daher als Referenz für die Sicht eines durchschnittlichen Bedieners vom Fahrersitz aus herangezogen werden.

Häufig reicht die alleinige Verschiebung des Fahrersitzes aber nicht aus, um dem Fahrer hier eine befriedigende Orientierung zu ermöglichen. Hiervon ausgehend ist es im Stand der Technik daher ferner bereits bekannt, so genannte Peilstäbe an der Tandemwalze anzuordnen, die dem Fahrer vom Fahrstand aus eine Anpeilen des in Fahrrichtung vor der Tandemwalze liegenden Bodens an einem Punkt ermöglicht, der in Fahrrichtung mit der jeweiligen Stirnseite der jeweiligen Verdichtungsbandage fluchtet. Der Gebrauch dieser Peilstäbe ist allerdings verhältnismäßig aufwendig, denn sie erfordern eine individuelle und diffizile Justierung durch den jeweiligen Bediener vor Aufnahme des Arbeitsbetriebes. Ergänzend zu dem mit dem Justiervorgang einhergehenden erhöhten Nutzungsaufwand sind Peilstäbe auch insoweit nachteilig, als dass sie, speziell im Vibrationsbetrieb der Tandemwalze, wackeln und von daher nur eine äußerst ungenaue und auf Dauer für den Bediener auch unangenehme Peilung ermöglichen. Die JPH 08 134 824 A offenbart eine Gummiradwalze mit in ihrer Position verstellbaren Peilstäben, wobei je ein Peilstab einer Seite der Gummiradwalze zugeordnet sein kann. Die EP 2 775 032 A1 schlägt für einen Walzenzug an einem Verdichterrahmen die Anordnung zweier clipartig ausgebildeter und an einem Haltegriff verschiebbar anbringbarer Spuranzeiger vor.

Hiervon ausgehend ist es die Aufgabe der Erfindung, eine einfache aber gleichzeitig zuverlässige Möglichkeit anzugeben, dem Fahrer das Abschätzen der Lage der Stirnseite einer Bandage bei einer Tandemwalze im Bodenuntergrund aus dem Fahrstand heraus zu erleichtern und insbesondere eine verbesserte Möglichkeit für einen Bediener einer Tandemwalze anzugeben, eine Tandemwalze entlang einer Kante des Bearbeitungsbereiches entlangzuführen.

Die Lösung der Aufgabe gelingt mit einer Tandemwalze gemäß dem unabhängigen Anspruch. Bevorzugte Weiterbildungen sind in den abhängigen Ansprüchen angegeben.

Eine vorliegend gattungsgemäße Tandemwalze zur Verdichtung eines Bodenuntergrundes umfasst einen von einer in Bezug auf eine Fahrrichtung vorderen Verdichtungsbandage und einer in Bezug auf die Fahrrichtung hinteren Verdichtungsbandage getragenen Maschinenrahmen, wobei die hintere Verdichtungsbandage von der vorderen Verdichtungsbandage in einer Maschinenlängsrichtung beabstandet ist, bei Geradeausfahrt insbesondere aber spurgleich mit der vorderen Verdichtungsbandage ausgebildet und am Maschinenrahmen gelagert sein kann. Die Fahrrichtung bezeichnet die aktuelle Bewegungsrichtung der Tandemwalze. Dies kann eine Vorwärtsrichtung oder eine der Vorwärtsrichtung entgegengesetzt verlaufende Rückwärtsrichtung sein. Eine weitere wesentliche Komponente einer gattungsgemäßen Tandemwalze ist ein Fahrstand mit einem in die jeweilige Fahrrichtung ausgerichteten Fahrersitz, wobei der Fahrersitz mittels einer Verstelleinrichtung von einer Mitte des Fahrstandes, bezogen auf die horizontale Erstreckung des Fahrstandes quer zu einer Vorwärtsrichtung, aus gesehenen Bedienposition ("Mittelposition") hin in Richtung wenigstens einer Seite der Tandemwalze quer zur Maschinenlängsrichtung bzw. Fahrrichtung zu wenigstens einer definierten ersten Bedienposition ("erste Verschiebeposition") und in dieselbe Richtung zu der Seite zu wenigstens einer definierten zweiten Bedienposition ("zweite Verschiebeposition") verschiebbar ist. Die definierte zweite Bedienposition ist somit weiter horizontal und quer zur Fahrrichtung zur Mitte des Fahrstandes beabstandet als die definierte erste Bedienposition. Die definierte erste und zweite Bedienposition befinden sich allerdings ausgehend von der Mittelposition zur selben Seite versetzt, konkret somit zur rechten oder linken Seite des Fahrstandes. Ein im Fahrersitz sitzender Bediener blickt in der ersten und in der zweiten definierten Bedienposition des Fahrersitzes jeweils in Richtung der Fahrrichtung, je nach einer Drehposition des Fahrersitzes somit in Vorwärtsrichtung oder Rückwärtsrichtung. Wesentlich ist, dass sich die definierte erste und die definierte zweite Bedienposition hinsichtlich der Drehlage und der Blickrichtung des Fahrers aus der Fahrerkabine zur Vorderseite oder Rückseite der Tandemwalze nicht unterscheiden. Die Blickposition des Fahrers wird dabei durch den genormten Augenpunkt gemäß der einleitend genannten Normen festgelegt.

Wesentlich zur Lösung der Aufgabe ist nun, dass die Tandemwalze wenigstens zwei Peilungsmarkierungen aufweist, wobei die wenigstens zwei Peilungsmarkierungen bei einer Projektion in eine gemeinsame virtuelle Horizontalebene zueinander versetzt angeordnet sind, wobei die erste Peilungsmarkierung der definierten ersten Bedienposition und die zweite Peilungsmarkierung der definierten zweiten Bedienposition zugeordnet ist, derart, dass die erste Peilungsmarkierung für einen im sich in der ersten Bedienposition befindlichen Fahrersitz sitzenden Bediener und die zweite Peilungsmarkierung für den im sich in der zweiten Bedienposition befindlichen Fahrersitz sitzenden Bediener jeweils einen Bodenpunkt in Sichtverlängerung vom Fahrersitz aus angeben, der jeweils parallel zur Fahrrichtung gesehen in linearer Verlängerung zum stirnseitigen Bodenaufstandspunkt derjenigen Stirnseite der in Fahrrichtung vorderen Verdichtungsbandage liegt, die in Richtung der Verstellrichtung des Fahrersitzes von der definierten ersten Bedienposition in Richtung der definierten zweiten Bedienposition das Fahrersitzes lokalisiert ist. Mithilfe der ersten und der zweiten Peilungsmarkierung kann der im Fahrersitz sitzenden Bediener somit einen Punkt bzw. eine Stelle im Boden identifizieren, der in Verlängerung in Richtung der Fahrrichtung zu einer Stirnseite der vorderen Verdichtungsbandage liegt. Diesen Punkt wird er also bei Geradeausfahrt erst bei einer Fortsetzung der Bewegung der Tandemwalze in Fahrrichtung passieren. Der Punkt liegt somit in Fahrrichtung vor der Tandemwalze und bewegt sich mit dieser mit. Mit anderen Worten trifft ein Sichtstrahl vom Augenpunkt des im Fahrersitz befindlichen Bedieners über die bzw. entlang der der jeweiligen definierten Sitzposition zugeordneten Peilungsmarkierung an diesem Bodenpunkt auf den Boden. Die jeweilige Peilungsmarkierung und die dieser Peilungsmarkierung zugeordnete definierte Bedienposition werden dabei so ausgerichtet, dass dieser Punkt auf einer Verlängerung der Stirnseite bzw. des stirnseitigen Bodenaufstandspunktes der Bandage auf dem Bodenuntergrund parallel zur Geradeausrichtung der Tandemwalze liegt. Dies kann experimentell oder rechnerisch ermittelt werden. Die Peilungsmarkierungen erleichtern ihm daher die Abschätzung, ob er die Tandemwalze noch weiter an ein neben der Tandemwalze verlaufendes längserstrecktes Hindernis, wie beispielsweise einen Rinnstein oder eine Kante einer Asphaltsmatte, heranführen muss, eine bereits optimal an diese Kante heranreichende Position innehat oder gar diese Kante überlappt. Die erste und die zweite Peilungsmarkierung sind dazu derart an der Tandemwalze angeordnet, dass diese Peilung auf eine auf einer planen und horizontal verlaufenden Ebene aufstehenden Tandemwalze sowie dem SIP bzw. dem Augenpunkt gemäß den einleitend genannten Normen an der Maschine angeordnet ist. Eine definierte Bedienposition des Fahrersitzes bezeichnet eine eindeutige Position des Bediensitzes innerhalb des Fahrstandes, insbesondere der Fahrerkabine, die durch die im Nachfolgenden noch näher angegebenen Maßnahmen festgelegt sein kann. Wichtig ist, dass jeder der wenigstens zwei definierten Bedienpositionen jeweils eine eigene Peilungsmarkierung zugeordnet ist, um den sich aufgrund der Sitzverschiebung ergebenden Änderungen der Blickperspektive des im Fahrersitz befindlichen Fahrers relativ zur jeweiligen Stirnseite der Verdichtungsbandage Rechnung zu tragen. Peilt der Bediener somit bei in der ersten definierten Bedienposition befindlichem Fahrersitz über die ersten Peilungsmarkierung, kann er einen Bodenpunkt identifizieren, der im Wesentlichen auf Höhe derjenigen Stirnseite der Verdichtungsbandage liegt, zu der der Fahrersitz von der Mitte des Fahrstandes aus verschoben ist, und der bei einer Fortsetzung der Bewegung der Tandemwalze in Geradeausrichtung in Fahrtrichtung von der Tandemwalze passiert aber nicht überfahren werden wird. Die zweite Peilungsmarkierung ist entsprechend zur Identifikation eines solchen Bodenpunktes bei in der definierten zweiten Bedienposition befindlichem Fahrersitz ausgebildet. Die mit den beiden Peilungsmarkierungen ermittelbaren Bodenpunkte können aufeinanderliegend sein, können aber auch auseinanderliegend sein. Wesentlich ist, dass der Bodenpunkt einige Meter, insbesondere im Bereich von 2-10 m, in Fahrrichtung vor der Tandemwalze liegt, um eine sinnvolle Peilung vom Fahrersitz aus zu ermöglichen.

Die wenigstens ersten und die wenigstens zweiten Peilungsmarkierung beziehen sich zusammen somit auf eine Fahrrichtung (vorwärts oder Rückwärtsrichtung) und eine Seitenverstellung des Fahrersitzes ausgehend von der Mitte des Fahrstandes (also zur rechten oder zur linken Seite der Tandemwalze). Es versteht sich, dass weitere Peilungsmarkierungen in entsprechender Weise für beide Seiten und/oder beide Fahrtrichtungen an der Tandemwalze vorhanden sein können. Ist für jede Seite in jeder Fahrrichtung ein entsprechender Satz an Peilungsmarkierungen vorhanden, umfasst die Tandemwalze dann somit insgesamt acht Peilungsmarkierungen. Der Einfachheit halber wird nachstehend lediglich die Ausrichtung des Fahrersitzes in eine Fahrrichtung und zu einer Seite näher beschrieben. Ergänzend oder alternativ gilt dies aber auch für die weiteren Ausrichtungen des Fahrersitzes.

Unabhängig von der konkreten Positionierung und Ausgestaltung der wenigstens zwei Peilungsmarkierungen ist es im Rahmen der Erfindung vorgesehen, dass die wenigstens zwei Peilungsmarkierungen ortsfest an der Tandemwalze angebracht sind, hinsichtlich ihrer Positionierung und/oder Formgebung somit nicht verstellbar sind. Ideal ist es, wenn die wenigstens zwei Peilungsmarkierungen in eine bestehende, eine Außenoberfläche der Bodenverdichtungsmaschine bildende Struktur, insbesondere einstückig, integriert sind, wie beispielsweise den Maschinenrahmen, eine Abdeckhaube, ein Fahrgestell, insbesondere einem Lagerarm und/oder einer Traverse, oder ähnliches. Damit ist keine zusätzliche Einrichtung erforderlich und die Peilungsmarkierungen können auf äußerst robuste Art in bestehende Strukturen der Tandemwalze, insbesondere ab Werk, integriert werden. Es entfallen jegliche Justierarbeiten im Feld. Durch die mit einem Bauteil der Tandemwalze, insbesondere einem Rahmenelement, einer Abdeckhaube, einem Teil des Fahrgestells etc., integrale Ausbildung der Peilungsmarkierung schwingt diese somit nur zusammen mit der Gesamtmaschine, was deutlich geringer ist als es bei den konventionellen, separaten Peilstäben der Fall ist.

Grundsätzlich können die wenigstens ersten und die wenigstens zweiten Peilungsmarkierung an der Tandemwalze im vom im Fahrersitz sitzenden Bediener in Fahrrichtung vor dem Fahrer liegenden Bereich angeordnet werden. Besonders zuverlässig gelingt die Peilung für den Fahrer allerdings dann, wenn sich wenigstens eine der wenigstens zwei und bevorzugt beide der wenigstens zwei Peilungsmarkierungen aus einer Perspektive des auf dem Fahrersitz sitzenden Bedieners in Maschinenlängsrichtung bzw. in Fahrrichtung der Tandemwalze an einer in Geradeausfahrtrichtung vorderen Sichtkante der Tandemwalze abzeichnen und/oder sich bis zu dieser Sichtkante erstrecken. Die Sichtkante bezeichnet vorliegend somit die vom Bediener im Fahrersitz sichtbare in aktueller Fahrtrichtung vorn liegende Kante der Maschine. Eine sich bis an die Sichtkante erstreckende Peilungsmarkierung hat den Vorteil, dass sie im Sichtfeld des Fahrers direkt in den in Fahrrichtung davor liegenden Bodenuntergrund übergeht und somit ein direktes Anpeilen ohne zwischen der Peilungsmarkierung und dem anzupeilenden Bodenpunkt liegende Unterbrechungsstrukturen ermöglicht. Die Peilungsmarkierung zeichnet sich bevorzugt ferner in der Sichtkante ab, wenn sie beispielsweise eine Verformung in Form einer Einkerbung oder Materialaufdickung aufweist, so dass in der Sichtkante selbst eine leichte und deutlich erkennbare Struktur erhalten wird. Auch eine auf die Sichtkante vom Fahrer aus zulaufende und/oder eine mit der Sichtkante abschließende Struktur, wie beispielsweise einen Schnittpunkt oder Ähnliches, ist vorteilhaft.

Die Verdichtungsbandagen werden bei Tandemwalzen häufig über eine gabelartige Struktur am Maschinenrahmen gelagert. Zu den beiden einander gegenüberliegenden Stirnseiten der Bandage umfasst diese Lagerstruktur jeweils einen von oben kommenden Lagerarm, der ein Drehlager für die Verdichtungsbandage trägt. Die Lagerarme können an einer parallel zur Drehachse der Verdichtungsbandage diese im Wesentlichen über ihre axiale Längserstreckung überspannende Traverse angeordnet sein. Bei drehschemelgelenkten Tandemwalzen ist diese Traverse um eine vertikale Achse drehbar in einem Drehschemellager gelagert, bei knickgelenkten Tandemwalzen ist diese Traverse dagegen üblicherweise ortsfest gegenüber dem über das Knickgelenk verbundenen vorderen oder hinteren Rahmenteil. Häufig bildet diese Traverse von der Tragstruktur für die Bandagen somit das in Fahrrichtung liegende vordere und in diesem Bereich obere strukturelle Ende der Tandemwalze und damit häufig auch wenigstens teilweise die Sichtkante der Bodenverdichtungsmaschine für den Fahrer. Bereits von daher eignet sich insbesondere die Traverse zur Anordnung und Ausbildung wenigstens einer und bevorzugt beider Peilungsmarkierungen. Auch eine Abdeckhaube und/oder der Lagerarm kann bevorzugt zur Anordnung und Ausbildung einer der Peilungsmarkierungen herangezogen werden.

Es ist vorteilhaft, wenn die wenigstens zwei Peilungsmarkierungen aus einer Perspektive des auf dem Fahrersitz sitzenden Bedieners in Sichtverlängerung vom Fahrersitz in Fahrrichtung vor dem Bediener, bevorzugt vor der Frontscheibe, besonders bevorzugt vor einer horizontalen Rotationsachse der Verdichtungsbandage und ganz besonders bevorzugt wenigstens an der Sichtkante der Tandemwalze, angeordnet sind. Je weiter die Peilungsmarkierungen vom Fahrer weg und/oder je näher zur Sichtkante hin versetzt sie angeordnet sind, desto exakter kann der Bediener aus dem Fahrersitz heraus über die Peilungsmarkierungen die Tandemwalze steuern. Somit ist es besser die Peilungsmarkierungen vom Fahrer weg zu rücken und an entfernt zu diesem liegenden Stellen der Tandemwalze anzuordnen. Wie bereits erwähnt, ist es optimal, die Peilungsmarkierungen zumindest bis sich zur Sichtkante erstreckend auszubilden und/oder unmittelbar, beispielsweise als strukturelle Erhebung und/oder Vertiefung, in die Sichtkante zu integrieren.

Wenn wenigstens eine der beiden Peilungsmarkierungen eine von einem Augenpunkt des Fahrers ausgehende, linear erstreckte, sich von der unmittelbar daran anschließenden Maschinenumgebung abzeichnende Peilungsgerade aufweist, wird dem Bediener das Peilen ebenfalls erleichtert, denn es ist angenehmer, vergleichbar mit einem wegweisenden Pfeil, in Verlängerung einer sichtbaren Geraden auf die vor der Tandemwalze liegende Umgebung zu peilen, als beispielsweise über eine lediglich punktuell erkennbare Peilungsmarkierung. Aus diesem Grund ist es daher auch bevorzugt, wenn beide Peilungsmarkierungen jeweils eine Peilungsgerade aufweisen. Die Peilungsmarkierungen können grundsätzlich parallel zueinander verlaufen, wobei dies mit einer, im Regelfall aber hinnehmbaren, Ungenauigkeit aufgrund der sich zwischen den beiden definierten Bedienpositionen ändernden Blickperspektiven ergibt. Diesen unterschiedlichen Blickperspektiven kann allerdings auch insoweit Rechnung getragen werden, als dass es auch möglich ist, die wenigstens teilweise linear erstreckten beiden Peilungsmarkierungen derart auszubilden, dass sie bei einer Projektion in eine gemeinsame virtuelle Horizontalebene in einem Winkel zueinander verlaufen, insbesondere kleiner 5°, und/oder in einem Winkel zur Geradeausrichtung stehen.

Hinsichtlich der konkreten Ausgestaltung einer oder beider der wenigstens zwei Peilungsmarkierungen kann auf mannigfaltige Variationsmöglichkeiten zurückgegriffen werden. Wesentlich ist, dass der Bediener die Peilungsmarkierung einerseits möglichst gut erkennen kann bzw. diese von der an die Peilungsmarkierung angrenzenden Maschinenumgebung unterscheiden kann, und andererseits, dass diese möglichst leicht herstellbar und robust ist. In diesem Zusammenhang hat es sich beispielsweise als vorteilhaft erwiesen, wenn sich wenigstens eine der wenigstens zwei Peilungsmarkierungen durch eine Erhebung und/oder Einkerbung gegenüber dem an die jeweilige Peilungsmarkierung angrenzenden Maschinenbereich abzeichnet. Dies kann beispielsweise durch gezielte Materialaufwölbungen, Bauteilfugen und/oder Materialvertiefungen, beispielsweise Einfräsungen, erreicht werden. Wird dabei auf eine Fuge zurückgegriffen, kann diese zudem eine lokale Fugenverbreiterung aufweisen, d.h., die quer zu einer Längserstreckung der Fuge verlaufende Breite der Fuge ("Spaltbreite") kann übergangsweise zumindest verbreitert ausgebildet sein. Dadurch kann diese spezielle Fuge mit Doppelfunktionen (Bauteilfuge und Peilungsmarkierungen) von anderen, beispielsweise benachbarten Bauteilfugen, gezielt abgehoben und von Bediener auch besser erkannt und zu Peilungszwecken genutzt werden. Durch die Fugenverbreiterung kann ferner selbst bei einfarbiger Lackierung dieses Bereiches eine Schattenkontrastierung erreicht werden, die die Identifikation der hier relevanten Fuge zu Peilungszwecken zusätzlich erleichtert. Ergänzend oder alternativ kann die Peilungsmarkierung eine farbliche Kontrastierung gegenüber dem an die jeweilige Peilungsmarkierung angrenzenden Maschinenbereich aufweisen, insbesondere mittels eines Aufklebers und/oder eine Farblackmarkierung. Sie kann weiter ergänzend oder alternativ Teil wenigstens einer die Außenoberfläche der Tandemwalze durchdringenden Öffnung, insbesondere im Bereich einer Traverse zur Lagerung einer der Verdichtungsbandagen, sein und/oder Teil einer Materialaufdickung und/oder Materialaussparung sein. Sie kann auch Teil einer Zugangs- und/oder Durchgriffsöffnung sein, insbesondere zu einer Bandagenberieselungseinrichtung und/oder einer Abstreifeinrichtung.

Ein wesentlicher Aspekt der Erfindung besteht darin, dass der Fahrersitz exakt in die für eine korrekte Ausrichtung des Fahrersitzes zur jeweiligen Peilungsmarkierung erforderliche Position ("definierte Position") bringbar ist, um beispielsweise fehlerhafte Peilungen ausschließen zu können. Es ist daher vorteilhaft, wenn für wenigstens eine und bevorzugt beide der wenigstens zwei Peilungsmarkierungen eine Ausrichthilfe vorhanden ist, um eine exakte Abstimmung der Positionierung des Fahrersitzes für die jeweilige Peilungsmarkierung in wenigstens einer definierten Bedienposition zu gewährleisten. Die Ausrichthilfe ermöglicht es somit, eine Positionierung des Fahrersitzes in der definierten ersten Bedienposition und/oder in der definierten zweiten Bedienposition festzulegen. Grundsätzlich können hier in irgendeiner Form optische Markierungen oder Ähnliches vorgesehen sein, um dem Bediener das korrekte Ausrichten des Fahrersitzes zu ermöglichen. Auch akustische und/oder haptisch wahrnehmbare Signale, geeignete Sensoreinrichtungen etc. sind grundsätzlich möglich.

Ergänzend oder alternativ umfasst die Ausrichthilfe jedoch bevorzugt einen Anschlag im Verstellweg des Fahrersitzes von der Mitte in Richtung der ersten und/oder zweiten definierten Bedienposition, an der der Fahrersitz oder ein mit diesem zusammen verstellbares Element anschlägt, wenn der Fahrersitz seine definierte erste und/oder definierte zweite Bedienposition erreicht hat. Es kann vorgesehen sein, dass für jede der ersten und zweiten definierten Bedienposition jeweils ein Anschlag vorhanden, wobei der die erste Bedienposition festlegende Anschlag bevorzugt aus dem Verstellweg des Fahrersitzes in Richtung von der ersten definierten Bedienposition in Richtung zur zweiten definierten Bedienposition vom Fahrer, insbesondere manuell, entfernbar oder lösbar ist. Der die definierte erste Bedienposition festlegende Anschlag kann ortsfest zu einem zwischen einer Schließposition und einer Öffnungsposition verstellbaren Seitenfenster der Tandemwalze angeordnet sein und/oder der die definierte zweite Bedienposition festlegende Anschlag kann durch den maximalen Stellweg der Verstelleinrichtung des Fahrersitzes und/oder einen Seitenwandanschlag gebildet sein. Ergänzend oder alternativ zu einer mechanisch wirkenden Ausrichthilfe kann auch wenigstens eine optische Markierung in der Fahrerkabine vorhanden sein, die dem Fahrer das Erreichen der definierten ersten und/oder zweiten Bedienposition anzeigt. Die wesentliche Funktion der Ausrichthilfe besteht darin, das zuverlässige und wiederholbare Positionieren des Fahrersitzes in der der jeweiligen Peilungsmarkierung zugeordneten definierten Verstellposition des Fahrersitzes (definierte erste und zweite. Bedienposition) zu gewährleisten. Diese beiden Sitzpositionen sind nicht vom Fahrer frei wählbare, sondern letztlich durch die Position der wenigstens zwei Peilungsmarkierungen an der Tandemwalze eindeutig festgelegt.

Da vorliegend mehr als eine einzige Peilungsmarkierung pro Verstellseite des Fahrersitzes genutzt werden soll, kann es, insbesondere für unerfahrene Bediener, schwierig sein, die jeweilige Peilungsmarkierung der korrekten Sitzbedienposition zuzuordnen. In diesem Zusammenhang hat es sich als vorteilhaft erwiesen, wenn eine Zuordnungshilfe, insbesondere innerhalb des Fahrstandes, vorhanden ist, die dem im Fahrersitz befindlichen Bediener anzeigt, welche der wenigstens zwei Peilungsmarkierungen welcher der definierten ersten und/oder zweiten Bedienposition zugeordnet ist. Dadurch, dass die Peilungsmarkierungen gegenüber der übrigen Maschine unverstellbar und insbesondere einstückig mit beispielsweise einer Rahmenkomponente oder anderen Maschinenkomponente ausgebildet sind, hat die Peilungsmarkierungen immer das gleiche Aussehen und ist immer an derselben Stelle der Tandemwalze identifizierbar. Eine Möglichkeit, dem Bediener die Zuordnung der jeweiligen Peilungsmarkierung zu erleichtern, kann daher beispielsweise darin bestehen, über ein Bediendisplay dem Fahrer anzuzeigen, ob der Fahrersitz aktuell in einer definierten Bedienposition ist und/oder welche Peilungsmarkierungen vorhanden sind und/oder welche Peilungsmarkierung der aktuellen Sitzposition zugeordnet ist. Dies kann sogar soweit gehen, dass dem im Fahrersitz sitzenden Bediener die Blickperspektive über die jeweilige Peilungsmarkierung im Display angezeigt wird (sogar aus "seiner" Blickperspektive), was eine besonders schnelle Zuordnung für den Bediener ermöglicht. Ergänzend oder alternativ können natürlich auch entsprechende Darstellungen und/oder Farbkodierungen, beispielsweise der Peilungsmarkierungen selbst und/oder im Inneren der Fahrerkabine, beispielsweise abhängig von der Position eines Verstellschlittens des Fahrersitzes oder ähnlichem, wie beispielsweise Positionsindikatoren etc., vorhanden sein.

Tandemwalzen der gattungsgemäßen Art können optionale Zusatzaggregate umfassen, wie beispielsweise Splittstreuer oder sogenannte Kantenschneidgeräte. Ein Kantenschneidgerät ist beispielsweise in der EP2357281A2 näher beschrieben, auf die hiermit Bezug genommen wird. Die Aufgabe eines Kantenschneidgerätes (sei es nun mit einer Schneid- oder Andrückrolle) liegt darin, die Kante einer Asphaltsmatte exakt zu formen und/oder zu schneiden. Das Kantenschneidgerät weist dazu eine Arbeitsrolle auf, die beim Einsatz des Kantenschneidgerätes in den Boden abgesenkt werden kann und den in axialer Richtung der Verdichtungsbandage stirnseitig neben der Verdichtungsbandage die Asphaltsmatte randseitig andrückt und/oder schneidet. Die Schnittrichtung beziehungsweise Schnittkante des Kantenschneidgerätes verläuft somit in axialer Richtung versetzt zur Stirnseite der jeweiligen Verdichtungsbandage. Es ist daher bevorzugt, wenn die Tandemwalze eine einer definierten Bedienposition des Fahrersitzes zugewiesene (wobei es sich hierbei insbesondere um die definierte zweite Bedienposition handeln kann) zusätzliche Peilungsmarkierung für den Schnittkantenverlauf eines Kantenschneidgerätes aufweist. Diese wenigstens eine weitere Peilungsmarkierung ist somit der Schneidkante eines Kantenschneidgerätes zugeordnet, insbesondere ausschließlich für den in der zweiten Bedienposition befindlichen Fahrersitz. Die Peilungsmarkierung ist auch in diesem Fall derart ausgebildet und an der Tandemwalze positioniert, dass sie einen Bodenpunkt in Sichtverlängerung vom Fahrersitz aus angibt, der parallel zur Vorwärtsrichtung in Fahrrichtung gesehen in linearer Verlängerung zur Schnittkante eines Schneidrades des Kantenschneidgerätes liegt.

Die Erfindung wird nachstehend anhand der in den Figuren gezeigten Ausführungsbeispiele näher erläutert. Es zeigen schematisch:
- Figur 1:: eine Seitenansicht einer schemelgelenkten Tandemwalze;
- Figur 2:: eine Draufsicht auf eine Tandemwalze mit einem in einer ersten definierten Bedienposition befindlichen Fahrersitz;
- Figur 3:: eine Draufsicht auf die Tandemwalze aus Fig. 2 mit einem in einer zweiten definierten Bedienposition befindlichen Fahrersitz;
- Figur 4:: eine Vergrößerung des Bereiches I aus der Fig. 2; und
- Figur 5:: eine Blickperspektive aus dem Fahrstand heraus.

Gleiche beziehungsweise gleich wirkende Bauteile werden in den Figuren mit den gleichen Bezugszeichen beziffert. Sich wiederholende Bauteile sind nicht in jeder Figur gesondert bezeichnet.

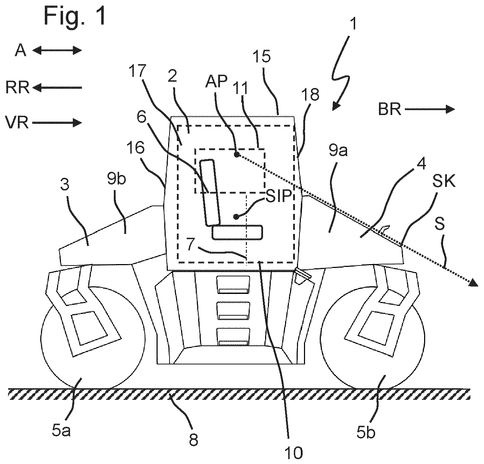

Figur 1 zeigt eine schematische Seitenansicht einer Tandemwalze 1, im konkreten Beispiel eine Straßenwalze, insbesondere eine schemelgelenkte Tandemwalze. Es kann sich aber auch um eine knickgelenkte Tandemwalze handeln. Die Tandemwalze 1 umfasst typischerweise einen Maschinenrahmen 3, der von einem Fahrwerk getragen wird, welches bevorzugt eine vordere beziehungsweise erste Verdichtungsbandage 5a und eine hintere beziehungsweise zweite Verdichtungsbandage 5b aufweist. Grundsätzlich können beispielsweise eine oder beide der vorliegend als Glattbandagen ausgebildeten Verdichtungsbandagen 5a, 5b auch von Radsätzen mit wenigstens drei koaxial zueinander angeordneten Gummirädern oder Bandagen mit strukturierten Mantelflächen (Schaffuß, Polygon) ersetzt werden. Die Verdichtungsbandagen 5a und 5b können pro Verdichtungsbandage auch zwei oder mehrere Teilbandagen umfassen. Im Arbeitsbetrieb wird die Bodenverdichtungsmaschine 1 mit den Verdichtungsbandagen 5a, 5b typischerweise über einen Boden 8, beispielsweise eine Asphaltmatte, gefahren, wodurch dieser verdichtet wird.

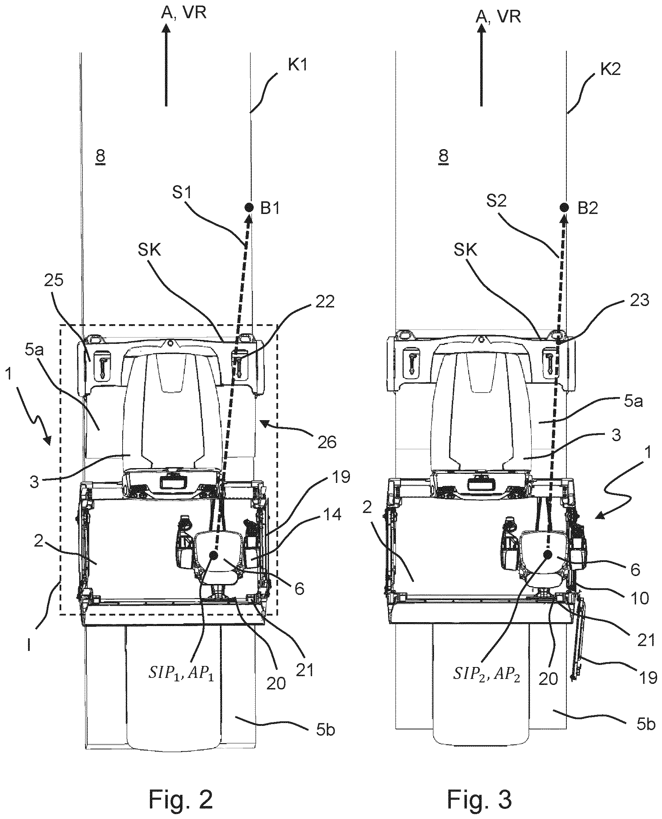

Die Bodenverdichtungsmaschine 1 umfasst bevorzugt einen Fahrstand, vorliegend beispielsweise in Form einer Fahrerkabine 2, die typischerweise vom Maschinenrahmen 3 getragen wird und die beispielsweise in einer Maschinenlängsrichtung A zwischen den Verdichtungsbandagen 5a, 5b angeordnet ist. Die Fahrerkabine 2 kann ein Dach 15 aufweisen, welches die Fahrerkabine 2 in Vertikalrichtung nach oben begrenzt (das Dach 15 ist in den Figuren 2 bis 4 aus Übersichtlichkeitsgründen nicht dargestellt). Darüber hinaus umfasst die Fahrerkabine bevorzugt Seitenwände 17, die beispielsweise quer zur Maschinenlängsrichtung a voneinander beabstandet angeordnet sind und die Fahrerkabine 2 seitlich begrenzen. In einer Vorwärtsrichtung VR wird die Fahrerkabine 2 typischerweise von einer Vorderwand 16 begrenzt, während sie in einer Rückwärtsrichtung RR bevorzugt von einer Rückwand 18 abgeschlossen wird. Das Dach 15, die Seitenwände 17 sowie die Vorderwand 16 und die Rückwand 18 können Fenster beziehungsweise Fensterflächen mit umfassen oder sogar zum größten Teil aus Fensterflächen, beispielsweise Glasscheiben, bestehen. Die Fahrerkabine 2 weist daher bevorzugt auch wenigstens eine Frontscheibe und eine Heckscheibe auf. Teil der Fahrerkabine 2 sind ferner zwei Seitentüren 10 (10R auf der in VR gesehen rechten und 10L auf der in VR gesehen linken Seite der Tandemwalze 1). Diese Seitentüren 10 sind aus einer Geschlossenposition öffenbar, um den Zutritt in den Innenraum der Fahrerkabine von außen zu ermöglichen. Teil der Seitentüren 10R und 10L kann jeweils ein Seitenfenster 11 sein, welches gegenüber der übrigen Seitentür ebenfalls unabhängig davon öffenbar und schließbar sein kann.

Im Inneren der Fahrerkabine 2 ist bevorzugt ein Fahrersitz 6 angeordnet, der insbesondere um eine vertikale Drehachse 7 drehbar ausgebildet sein kann. Bevorzugt kann der Fahrersitz 6 um die Sitzdrehachse 7 um wenigstens 180° gedreht werden und insbesondere zwischen einer Vorwärtsposition und einer Rückwärtsposition verstellt, insbesondere gedreht, werden. Im gezeigten Beispiel der Figur 1 ist der Fahrersitz 6 beispielsweise in der Vorwärtsposition dargestellt, d.h. ein im Fahrersitz 6 sitzender und von sich aus nach vorn blickender Fahrer blickt in diesem Fall in Vorwärtsrichtung VR der Maschine. Bevorzugt befindet sich der Fahrersitz 6 in der Vorwärtsposition, wenn die Bodenverdichtungsmaschine 1 in Vorwärtsrichtung VR betrieben beziehungsweise gefahren wird, während sich der Fahrersitz 6 bevorzugt in einer um 180° gedrehten Rückwärtsposition befindet, wenn die Bodenverdichtungsmaschine 1 in Rückwärtsrichtung RR betrieben beziehungsweise gefahren wird. Durch die Position des Fahrersitzes 6 in Vorwärts- oder Rückwärtsposition wird ebenfalls die Blickrichtung BR eines auf dem Fahrersitz 6 sitzenden Bedieners festgelegt. In Vorwärtsposition entspricht die Blickrichtung BR des auf dem Fahrersitz 6 sitzenden Bedieners bevorzugt der Vorwärtsrichtung VR, während die Blickrichtung BR des auf dem Fahrersitz 6 sitzenden Bedieners der Rückwärtsrichtung RR entspricht, wenn der Fahrersitz 6 in der Rückwärtsposition ist. Um die vorliegende Beschreibung möglichst einfach zu machen, sind bevorzugt die Vorwärtsrichtung VR, die Rückwärtsrichtung RR und die Blickrichtung BR des Bedieners immer parallel zur Maschinenlängsrichtung a ausgerichtet. Die Fahrrichtung wird als Geradeausfahrrichtung (somit parallel zur Längsrichtung a) angenommen.

Wie bereits beschrieben, kann die Bodenverdichtungsmaschine 1 sowohl vorwärts als auch rückwärts betrieben werden. Bei einem Betrieb in Vorwärtsrichtung VR fährt dann insbesondere die vordere Verdichtungsbandage 5a der hinteren Verdichtungsbandage 5b vorweg. Bei einem Betrieb in Rückwärtsrichtung RR dagegen würde insbesondere die hintere Verdichtungsbandage 5b der vorderen Verdichtungsbandage 5a vorweg fahren. Im vorliegenden Ausführungsbeispiel umfasst die Bodenverdichtungsmaschine 1 eine vordere beziehungsweise erste Haube 9a, die von der Fahrerkabine 2 aus insbesondere in Vorwärtsrichtung VR angeordnet ist und typischerweise darüber hinaus eine hintere beziehungsweise zweite Haube 9b, die von der Fahrerkabine 2 aus insbesondere in Rückwärtsrichtung RR angeordnet ist. Die Hauben 9a, 9b bilden bevorzugt Teile der Außenkontur der Maschine und umschließen typischerweise mindestens teilweise Kompartimente der Bodenverdichtungsmaschine 1, in denen verschiedene weitere Einrichtungen vorgesehen sein können. So kann beispielsweise unter der vorderen Haube 9b ein Flüssigkeitstank, beispielsweise für Wasser, angeordnet sein, wobei die im Tank gelagerte Flüssigkeit beispielsweise zum Besprühen der Verdichtungsbandagen 5a, 5b eingesetzt wird. Insbesondere unter der hinteren Haube 9a ist bevorzugt ein Lüftungs- und Abgassystem eines Antriebsmotors 4 der Bodenverdichtungsmaschine 1 angeordnet. Beim Antriebsmotor 4 kann es sich beispielsweise um einen Verbrennungsmotor oder um einen Elektromotor handeln. Darüber hinaus kann es beispielsweise ebenfalls sein, dass die Hauben 9a, 9b an sich unterschiedlich ausgebildet sind. Die Blickrichtung BR eines Bedieners hängt nun davon ab, in welcher Position sich der Fahrersitz 6 befindet und in welcher Richtung die Bodenverdichtungsmaschine 1 aktuell betrieben werden soll.

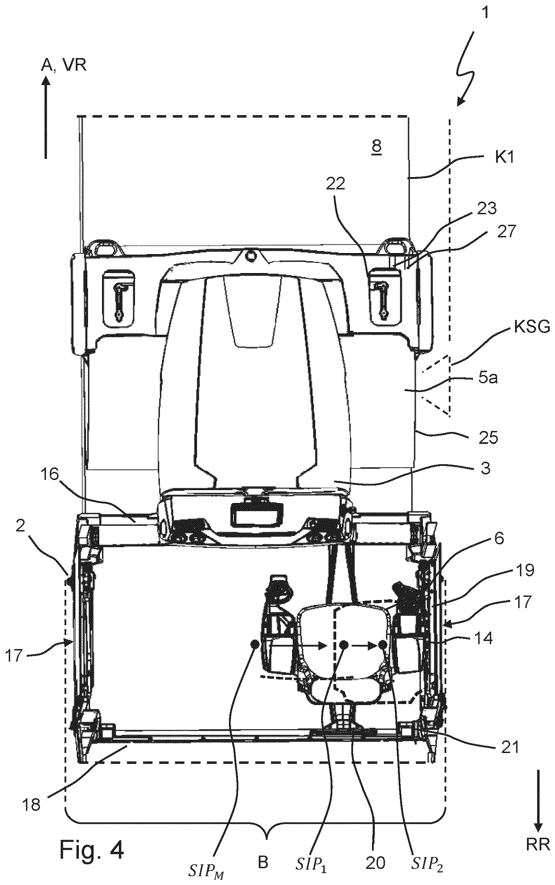

Zur objektiven Festlegung der Blickverhältnisse für einen im Fahrersitz 6 sitzenden Bediener der Tandemwalze 1 wird als Referenz für die Sitzposition bevorzugt der Sitzindexpunkt SIP gemäß der Norm EN ISO 5353 herangezogen, der nach den Vorgaben dieser Norm eindeutig bestimmbar ist und in den Figuren 1 und 2 exemplarisch für das vorliegende Ausführungsbeispiel angegeben ist. Der Sitzindexpunkt SIP befindet sich bevorzugt von der Drehachse 7 des Fahrersitze 6 beabstandet, beispielsweise in Radialrichtung der Drehachse 7 beziehungsweise in horizontaler Richtung. Ausgehend vom Sitzindexpunkt SIP wird der Augenpunkt AP bestimmt, der sich bevorzugt 680 mm vertikal über dem Sitzindexpunkt SIP befindet. Dies ist in der Norm ISO 5006 2017-04 entsprechend definiert. Es wird davon ausgegangen, dass sich die Augen eines durchschnittlichen Bedieners, der auf dem Fahrersitz 6 sitzt, im Bereich des Augenpunkts AP befinden, beispielsweise derart, dass der Augenpunkt AP zwischen den Augen des Bedieners liegt. Der Augenpunkt AP kann daher als Referenz für die Sicht eines durchschnittlichen Bedieners vom Fahrersitz 6 aus herangezogen werden. Ferner wird zur Definition der hier anzunehmenden Verschiebeposition des Fahrersitzes eine Mittelposition des Fahrersitzes 6 angenommen. Diese Mittelposition des Fahrersitzes 6 liegt dann vor, wenn der Fahrersitz bezüglich seine SIPs in der Mitte der maximalen Erstreckung des Fahrstandes bzw. der Fahrerkabine 2 in einer horizontalen Bezugsebene und quer zur Vorwärtsrichtung VR positioniert ist (Fig. 4). Diese Position ist in der Fig. 4 durch "SIPm" angegeben. Ergänzend oder alternativ kann diese auch durch die Mitte bezüglich des Gesamtverstellweges des Fahrersitzes 6 innerhalb der Fahrerkabine festgelegt sein.

In der Fig. 1 ist mit S ferner ein Sichtstrahl ausgehend vom Augenpunkt AP angegeben, der auf einer vertikalen Achse um 680 mm nach oben vom SIP beabstandet ist. Es ist erkennbar, dass der im Fahrersitz 6 sitzende Fahrer über die Maschine nach vom ihm aus vorn blickt und dabei ein Teil der Maschine in seinem Blickfeld ist. Das vordere für ihn in dieser Situation sichtbare Ende bzw. die vordere für ihn sichtbare Kante der Tandemwalze bildet die Sichtkante SK. Unterhalb der Sichtkante sieht der Fahrer in der Regel einen Teil der Maschine. Oberhalb der Sichtkante sieht der Fahrer einen in Fahrrichtung der Tandemwalze vor der Maschine liegenden Bereich, üblicherweise Bodenbereich, der einige Meter vor der Maschine liegt. Dieser Umstand wird vorliegend nun in der nachstehend beschriebenen Weise gezielt genutzt, um dem Fahrer die Positionierung der Maschine relativ zu einem in Längsrichtung der Maschine verlaufenden Seitenhindernis, wie beispielsweise dem Seitenrand einer Asphaltmatte und/oder einen Rinn- oder Bordstein, zu erleichtern.

Wesentlich dafür ist zunächst, dass der Fahrersitz 6 in eine definierte erste Bedienposition und in eine definierte zweite Bedienposition bringbar ist. In der Draufsicht gemäß Figur 2 befindet sich der Fahrersitz 6 in einer in Vorwärtsrichtung VR gesehen von der Mittelposition zur rechten Seite verschobenen definierten ersten Bedienposition. Figur 3 zeigt den Fahrersitz 6 dagegen in einer definierten zweiten Bedienposition. Im Vergleich zur definierten ersten Bedienposition ist der Fahrersitz 6 in der definierten zweiten Bedienposition von der Mitte des Fahrstandes noch weiter zur Seite verschoben. Die in den Figuren 2 und 3 gezeigten Bedienpositionen sind insoweit definiert, als dass für jede der beiden Bedienpositionen jeweils einer Ausrichthilfe 13 vorgesehen sein kann, die sicherstellt, dass sich der Fahrersitz 6 bei einer Verstellung in der ersten oder der zweiten Bedienposition befindet. Beim vorliegenden Ausführungsbeispiel kann die Ausrichthilfe 13 in Form eines der ersten Bedienposition zugeordneten Anschlags 13A und eines der zweiten Bedienposition zugeordneten Anschlags 13B ausgebildet sein. Der Anschlag 13A wird durch ein Anschlagen einer in Verschieberichtung von der Mittelposition vor der Sitzfläche des Fahrersitzes 6 liegenden Außenseite einer Armlehne 14 und der Innenseite eines Griffselements 19 gebildet. Das Griffelement ist Teil des Seitenfensters 11 und somit zusammen mit dem Seitenfenster verstellbar. Der Fahrersitz 6 befindet sich demnach dann in seiner ersten definierten Bedienposition, wenn der Fahrersitz 6 mit seiner Armlehne 14 an das Griffelement 19 des geschlossenen Seitenfensters 11 bei geschlossener Seitentür 10 anschlägt. Dieser Anschlag stellt somit eine in Richtung der Verstellbewegung von der Mittelposition weg wirkende Verstellwegbegrenzung dar. Rein praktisch kann der Fahrer somit eine, beispielsweise stufenlos arretierbare, Sitzverstellbewegung, wie sie an sich aus dem Stand der Technik bekannt ist, lösen, den Fahrersitz 6 bis zum vorstehend beschriebenen Anschlag verschieben und anschließend den Fahrersitz 6 in dieser Position arretieren. Der Fahrersitz 6 befindet sich dann zuverlässig in der definierten ersten Bedienposition. Die definierte zweiten Bedienposition kann dagegen durch einen Anschlag beispielsweise eines Verstellschlittens 20 an einer Geleitsschiene 21 gebildet werden, wie in der Figur 3 gezeigt. Wichtig ist allerdings, dass beim vorliegenden Ausführungsbeispiel unabhängig von konkreten Ausführungsdetails die Ausrichthilfe derart ausgebildet sein kann, dass die definierte zweite Bedienposition nur dann eingestellt werden kann, wenn die hinsichtlich der Verstellbewegung des Fahrersitzes 6 von der Fahrstandmitte aus davor liegende ersten definierte Bedienposition überwunden werden kann. Dazu kann es beim vorliegenden konkreten Ausführungsbeispiel erforderlich sein, dass die ersten Ausrichthilfe erst gelöst werden muss, beispielsweise konkret das Fenster von der Schließposition in Figur 2 in eine geöffnete Position, wie beispielsweise in Figur 3 in der um im Wesentlichen 180° nach hinten verschwenkten Position, verstellt wird. Der durch das Griffelement 19 im Seitenfenster 11 gegen die Armlehne 14 anschlagende Teil wird auf diese Weise aus dem Verstellweg entfernt, so dass der Fahrersitz 6 nunmehr über die definierte ersten Bedienposition hinaus in die definierte zweiten Bedienposition verschiebbar ist.

Die für beide definierten Bedienpositionen des Fahrersitzes beschriebenen Anschläge gewährleisten, dass der an sich verstellbare Fahrersitz jeweils eine konkrete Position relativ zur übrigen Tandemwalze einnimmt und damit insbesondere auch die für einen im Fahrersitz 6 erreichte Blickperspektive definiert bzw. festgelegt ist. Erst dadurch ist es möglich, Peilhilfen für jede der beiden definierten Bedienpositionen im Blickfeld des Fahrers gezielt derart an der Tandemwalze anzuordnen, dass er aus der jeweiligen definierten Bedienposition vergleichsweise exakt einen stirnseitigen Bodenpunkt anpeilen kann, um die Tandemwalze 1 möglichst präzise an neben der Tandemwalze liegenden und/oder verlaufenden Hindernissen entlang führen zu können.

Das diesem Effekt zugrunde liegende Prinzip veranschaulichen weiter die Figuren 2 und 3. In den Figuren 2 und 3 ist mit S1 der Sichtstrahl ausgehend vom in der definierten ersten Bedienposition gegebenen Sitzindexpunkt SIP 1 und mit S2 der Sichtstrahl ausgehend vom in der definierten zweiten Bedienposition gegebenen Sitzindexpunkt SIP2 angegeben. Die Sichtstrahlen S1 und S2 gehen somit jeweils in den Figuren 2 und 3 vom Augenpunkt AP1 und AP2 aus, die 680 mm vertikal über dem SIP1/SIP2 liegen. Die Figuren 2 und 3 zeigen ferner eine Seitenkante K1 einer Asphaltmatte, auf der die Tandemwalze 1 aufsteht. Im vorliegenden Ausführungsbeispiel soll der Fahrer möglichst exakt an der Kante K1 entlangfahren, ohne dabei mit der im vorliegenden Beispiel rechten Stirnseite der Verdichtungsbandagen 5A und 5B die Kante K1 zu überfahren. Dazu helfen ihm die Peilungsmarkierungen 22 und 23. Die Peilungsmarkierung 22 ist dabei der definierten ersten Sitzposition und dem AP1 zugeordnet und die Peilungsmarkierungen 23 der definierten zweiten Sitzposition und dem AP2. Die Peilungsmarkierung 22 wird durch den in Vorwärtsrichtung VR verlaufenden Innenrand einer Öffnung in der Außenoberfläche einer Lagertraverse 25 gebildet. Über diese Öffnung kann, beispielsweise zu Wartungszwecken, auf beispielsweise eine darunter liegende Abstreifeinrichtung und/oder eine Bandagenberieselungseinrichtung und/oder einen Leuchtenstecker und/oder eine Schlauchhalterung zugegriffen werden. Diese Öffnung 24 ist nun exakt in der Weise an der Traverse angeordnet, dass der im Fahrersitz 6 befindliche Bediener vom Augenpunkt AP1 entlang der Peilungsmarkierungen 22 nach vorn blickt. Der Bodenpunkt B1, der aus seiner Perspektive in unmittelbarer Verlängerung der Peilungsmarkierungen 22 liegt, befindet sich in geradliniger und in Vorwärtsrichtung VR verlaufender Verlängerung zur Stirnseite 26 der Bandage 5A. Achtet der Bediener der Tandemwalze 1 somit im Fahrbetrieb darauf, dass sich der Bodenpunkt B1, von AP1 angepeilt über 22, entlang der Seitenkante K1 bewegt, kann er sicher sein, dass die Stirnseite 25 der Bandage 5A (und letztlich auch der hinterher laufenden Bandage 5B) vergleichsweise exakt auf der Asphaltsmatte nahe an die Seitenkante K1 herangeführt wird, diese aber nicht überlappt. Ähnlich verhält es sich nun mit der Peilungsmarkierung 23, die in entsprechender Weise der definierten zweiten Sitzposition bzw. dem Augenpunkt AP2 zugeordnet ist. Die Peilungsmarkierung 23 ist horizontal quer zur Vorwärtsrichtung zur Außenseite der Tandemwalze versetzt zur Peilungsmarkierung 22 positioniert. Dies ist erforderlich, da sich die Relativlage des Bedieners zur übrigen Tandemwalze und letztlich auch zum Verlauf der Seitenkante K1 zwischen der definierten ersten Bedienposition und der definierten zweiten Bedienposition ändert. Die Peilungsmarkierung 23 wird im vorliegenden Fall beispielhaft durch eine Materialerhebung im Bereich der Traverse 25 gebildet. Die Materialerhebung (oder auch Materialvertiefung) erstreckt sich bis in die vordere Sichtkante SK und ist somit insbesondere dadurch für den Bediener gut erkennbar, da sie sich durch die Erhebung (oder Vertiefung) gegenüber den an sie angrenzenden Bereichen der Sichtkante deutlich erkennbar abgrenzt. Grundsätzlich kann die Anzahl der Peilungsmarkierungen und/oder die konkrete Ausgestaltung der Peilungsmarkierungen mannigfaltig variiert werden. Der Kern und damit für die Erfindung wesentlich ist allerdings, dass einerseits die Einstellbarkeit des Fahrersitzes 6 in definierten Bedienpositionen sichergestellt ist (da die Peilungsmarkierungen ortsfest an der Tandemwalze angeordnet sind und sich somit nicht verstellen lassen) und auf diese einzelnen Bedienpositionen abgestimmt jeweils eine Peilungsmarkierung vorhanden ist, die gezielt die Lage der Stirnseite einer Bandage im Blickfeld für den Fahrer vor der Tandemwalze am Boden angibt. Wesentlich ist darüber hinaus, dass andererseits die jeweilige Peilungsmarkierung fest und unverstellbar mit der übrigen Tandemwalze verbunden ist, besonders einstückig und solide mit einem oder mehreren Rahmenelementen oder anderen, die Außenoberfläche bildenden Komponenten, Teilen der Tandemwalze 1 ausgebildet ist. Hierzu kann auf Nuten, Farbmarkierungen, Einfräsungen, Einkerbung, Materialaufdickungen, Oberflächenstrukturierungen etc. zurückgegriffen werden. Ideal ist es, wenn die Peilmarkierung derart ausgebildet ist, dass sie sich in Richtung des jeweiligen Sehstrahls S1/S2 linear erstreckt, besonders bevorzugt bis in die für den Fahrer bestehende Sichtkante SK hinein.

Die Ausschnittsvergrößerung gemäß Figur 4, die den Ausschnitt I aus Figur 2 vergrößert zeigt, verdeutlicht insbesondere die relative Lage der definierten ersten Bedienposition und der definierten zweiten Bedienposition in Bezug auf die Mittelposition (SIPm) sowie den dazu gleichgerichteten Versatz der Peilungsmarkierungen 22 und 23. Für Tandemwalze ist es ferner bekannt, eine oder mehrere Bandagen stirnseitig mit einem sogenannten Kantenschneidgerät auszubilden. Ein solches Kantenschneidgerät KSG ist beispielsweise in der er EP2357281A2 offenbart. Es kann nun einer definierten Bedienposition des Fahrersitzes zugeordnet eine weitere Peilungsmarkierungen 27 vorgesehen sein, mit der der Fahrer gezielt auf die Schnittkante des Kantenschneidgerätes peilen kann.

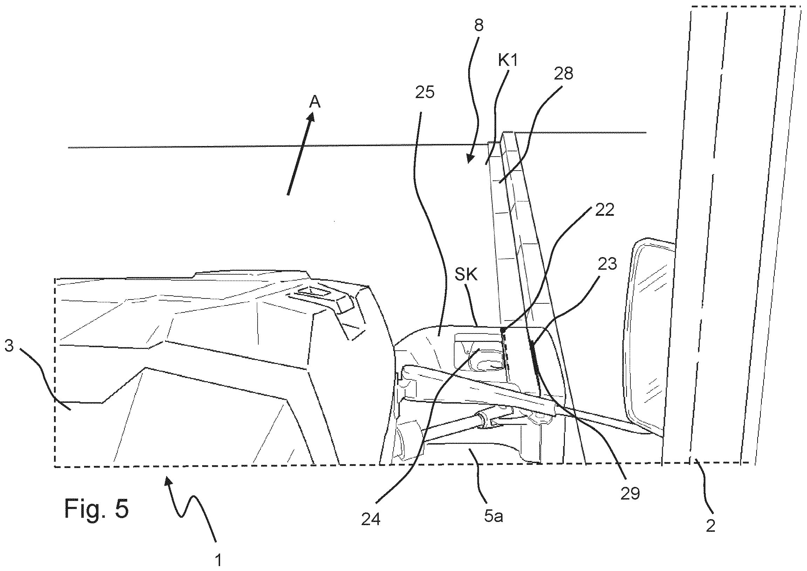

Figur 5 schließlich verdeutlicht den Effekt der erfindungsgemäßen Anordnung und zeigt die Blickperspektive eines innerhalb einer Fahrerkabine 2 im Fahrersitz 6 sitzenden Bedieners. Der Fahrersitz 6 befindet sich in einer definierten Bedienposition und der Sehstrahl des Fahrers geht von einem normgemäßen Augenpunkt oberhalb eines Sitzindexpunktes aus, wie in den vorhergehenden Figuren erläutert. Die Tandemwalze steht auf einer Asphaltmatte des Bodenuntergrundes 8 und verdichtet diese gerade entlang eines Rinnsteins 28. Die Asphaltmatte erstreckt sich horizontal und quer zur Vorwärtsrichtung bis unmittelbar an den Rinnstein 28 mit ihrer Seitenkante K1. Der Fahrer kann nun aus der Fahrerkabine in Vorwärtsrichtung A herausblicken und die Bewegung der Maschine über eine Peilung über die Peilungsmarkierung 22 führen. Die Peilungsmarkierung 22 ist derart als Verlängerung einer Öffnung 24 angeordnet, dass sich ihre vom Fahrer ausgehende virtuelle Verlängerung zur Sichtkante, die vorliegend durch eine Traverse 25 gebildet wird, erstreckt. Dort, wo diese von der Peilungsmarkierungen 22 gebildete Markierung im Sichtfeld des Fahrers in den vor der Tandemwalze 1 liegenden Boden übergeht, befindet sich die Verlängerung der Stirnseite (im Bild gemäß Figur 5 der rechten Stirnseite der vorderen Bandage 5 A). Solange Geradeausfahrt herrscht, muss der Fahrer somit lediglich darauf achten, die Tandemwalze mit der Peilungsmarkierung 22 entlang der Kante K1 zu führen, und kann dann sicher gehen, dass die Bandage 5A nahe am Rinnstein 28 entlang geführt wird, nicht aber auf diesen auffährt.

Die Figuren 2 bis 4 sind zweidimensionale Draufsichten auf die Tandemwalze 1. Es versteht sich, dass dadurch perspektivische Feinheiten teilweise nicht mathematisch exakt darstellbar sind. Wesentlich ist die Veranschaulichung des vorstehend erläuterten Prinzips zur Peilung vom Fahrstand aus auf eine der beiden außenliegenden Verlängerungen der Stirnseiten der in Fahrrichtung vorderen Bandage.

In Figur 5 ist ferner eine weitere Peilungsmarkierungen 23 in Form einer Bauteilfuge zwischen einem Traversenbalken und einem Bandagenlagerarm gezeigt. Figur 5 verdeutlicht dabei, dass durch eine gezielt eingebrachte übergangsweise Fugenverbreiterung 29 die optische Kontrastierung gegenüber an diese Peilungsmarkierungen 23 angrenzender Bereiche stärker hervorgehoben werden kann. Die Peilungsmarkierungen 23 nutzt der Bediener im vorliegenden Fall der Figur 5 (noch) nicht, solange der Fahrersitz 6 nicht in der dieser Peilungsmarkierungen 23 zugeordneten definierten Bedienposition ist. Diese wird dann erreicht, wenn der Fahrer eine weiter zur (hier rechten) Seite in seine dort vorhandene definierte Sitzbedienposition, beispielsweise definiert durch einen mechanischen Anschlag, verschoben ist. Diese Peilungsmarkierung 23 erstreckt sich zudem bis in die vordere Sichtkante SK, so dass der im Fahrersitz sitzende Bediener hier besonders exakt den Bodenbereich anpeilen kann.

## Patentansprüche

1. Tandemwalze (1) zur Verdichtung eines Bodenuntergrundes umfassend
- einen von einer in Bezug auf eine Fahrrichtung (VR, RR) vorderen Verdichtungsbandage (5a) und einer in Bezug auf die Fahrrichtung hinteren Verdichtungsbandage (5b) getragenen Maschinenrahmen (3), wobei die hintere Verdichtungsbandage (5b) von der vorderen Verdichtungsbandage (5a) in einer Maschinenlängsrichtung (A) beabstandet ist, und
- einen Fahrstand mit einem in die Fahrrichtung (VR, RR) ausgerichteten Fahrersitz(6), wobei der Fahrersitz (6) mittels einer Verstelleinrichtung von einer Mitte (M) des Fahrstandes, bezogen auf die horizontale Erstreckung des Fahrstandes quer zu einer Vorwärtsrichtung (VR), aus gesehenen Bedienposition hin in Richtung wenigstens einer Seite der Tandemwalze (1) quer zur Maschinenlängsrichtung (A) zu wenigstens einer definierten ersten Bedienposition und in dieselbe Richtung zu der Seite zu wenigstens einer definierten zweiten Bedienposition verschiebbar ist, wobei die definierte zweite Bedienposition weiter als die definierte erste Bedienposition zur Mitte (M) des Fahrstandes beabstandet ist, wobei ein im Fahrersitz (6) sitzender Bediener in der ersten und in der zweiten Bedienposition des Fahrersitzes (6) jeweils in Richtung der Fahrrichtung (VR, RR) blickt,
**dadurch gekennzeichnet,**
**dass** die Tandemwalze (1) wenigstens zwei Peilungsmarkierungen (22, 23) aufweist, wobei die wenigstens zwei Peilungsmarkierungen (22, 23) bei einer Projektion in eine gemeinsame virtuelle Horizontalebene zueinander versetzt angeordnet sind, wobei die erste Peilungsmarkierung (22) der definierten ersten Bedienposition und die zweite Peilungsmarkierung (23) der definierten zweiten Bedienposition zugeordnet ist, derart, dass die erste Peilungsmarkierung (22) für einen im sich in der ersten Bedienposition befindlichen Fahrersitz (6) sitzenden Bediener und die zweite Peilungsmarkierung (23) für den im sich in der zweiten Bedienposition befindlichen Fahrersitz (6) sitzenden Bediener jeweils einen Bodenpunkt (B1) in Sichtverlängerung vom Fahrersitz (6) aus angeben, der jeweils parallel zur Fahrrichtung gesehen in linearer Verlängerung zum stirnseitigen Bodenaufstandspunkt derjenigen Stirnseite der in Fahrrichtung vorderen Verdichtungsbandage (5a, 5b) liegt, die in Richtung der Verstellrichtung des Fahrersitzes (6) von der definierten ersten Bedienposition in Richtung der zweiten definierten Bedienposition des Fahrersitzes (6) lokalisiert ist, und dass die wenigstens zwei Peilungsmarkierungen (22, 23) permanent ortsfest am Maschinenrahmen (3) angeordnet sind.

2. Tandemwalze (1) nach Anspruch 1,
**dadurch gekennzeichnet,**
**dass** die wenigstens zwei Peilungsmarkierungen (22, 23) aus einer Perspektive des auf dem Fahrersitz (6) sitzenden Bedieners in Maschinenlängsrichtung (A) sich an einer in Geradeausfahrtrichtung vorderen Sichtkante (SK) der Tandemwalze (1) abzeichnen und/oder sich bis zu dieser Sichtkante (SK) erstrecken, insbesondere einer Traverse (25).

3. Tandemwalze (1) nach einem der vorhergehenden Ansprüche,
**dadurch gekennzeichnet,**
**dass** die wenigstens zwei Peilungsmarkierungen (22, 23) vom Maschinenrahmen (3)gebildet werden.

4. Tandemwalze (1) nach einem der vorhergehenden Ansprüche,
**dadurch gekennzeichnet,**
**dass** die wenigstens zwei Peilungsmarkierungen (22, 23) aus einer Perspektive des auf dem Fahrersitz (6) sitzenden Bedieners in Sichtverlängerung vom Fahrersitz (6) in Fahrrichtung (VR, RR) vor dem Bediener, bevorzugt vor der Frontscheibe besonders bevorzugt vor einer horizontalen Rotationsachse der Verdichtungsbandage (5a, 5b) und ganz besonders bevorzugt wenigstens an der Sichtkante (SK) der Tandemwalze (1) angeordnet sind.

5. Tandemwalze (1) nach einem der vorhergehenden Ansprüche,
**dadurch gekennzeichnet,**
**dass** wenigstens eine der beiden Peilungsmarkierungen (22, 23) eine von einem Augenpunkt (AP) des Fahrers ausgehende, linear erstreckte, sich von der unmittelbar daran anschließenden Maschinenumgebung abzeichnende, Peilungsgerade aufweist.

6. Tandemwalze (1) nach Anspruch 5,
**dadurch gekennzeichnet,**
**dass** beide Peilungsmarkierungen (22, 23) jeweils eine Peilungsgerade aufweisen, wobei die Peilungsgerade bei einer Projektion in eine gemeinsame virtuelle Horizontalebene in einem Winkel zueinander verlaufen, insbesondere kleiner 5°.

7. Tandemwalze (1) nach einem der vorhergehenden Ansprüche,
**dadurch gekennzeichnet,**
**dass** wenigstens eine und insbesondere beide der wenigstens zwei Peilungsmarkierungen (22, 23) wenigstens eines der folgenden Merkmale aufweist:
- sie zeichnet sich durch eine Erhebung und/oder Einkerbung gegenüber dem an die jeweilige Peilungsmarkierung angrenzenden Maschinenbereich ab;
- sie umfasst eine Fuge, insbesondere eine Fuge mit einer Fugenverbreiterung;
- sie weist eine farbliche Kontrastierung gegenüber dem an die jeweilige Peilungsmarkierung (22, 23) angrenzenden Maschinenbereich auf, insbesondere mittels eines Aufklebers und/oder eine Farblackmarkierung;
- sie ist Teil wenigstens einer die Außenoberfläche der Tandemwalze (1) durchdringenden Öffnung, insbesondere im Bereich einer Traverse (25) zur Lagerung einer der Verdichtungsbandagen (5a, 5b);
- sie ist Teil einer Materialaufdickung und/oder Materialaussparung;
- sie ist Teil einer Zugangsöffnung, insbesondere zu einer Bandagenberieselungseinrichtung und/oder einer Abstreifeinrichtung.

8. Tandemwalze (1) nach einem der vorhergehenden Ansprüchen,
**dadurch gekennzeichnet,**
**dass** eine Ausrichthilfe (13) vorhanden ist, die eine Positionierung des Fahrersitzes (6) in der definierten ersten Bedienposition und/oder in der definierten zweiten Bedienposition festlegt.

9. Tandemwalze (1) nach Anspruch 8,
**dadurch gekennzeichnet,**
**dass** die Ausrichthilfe (13) eine Einrichtung umfasst, die zur Ausgabe wenigstens eines haptischen und/oder optischen und/oder akustischen Signales ausgebildet ist, wenn der Fahrersitz (6) die definierte erste Bedienposition und/oder die definierte zweite Bedienposition erreicht hat.

10. Tandemwalze (1) nach einem Ansprüche 8 oder 9,
**dadurch gekennzeichnet,**
**dass** die Ausrichthilfe (13) wenigstens eines der folgenden Merkmale umfasst:
- es ist ein Anschlag (13A, 13B) im Verstellweg des Fahrersitzes (6) von der Mitte in Richtung der ersten und/oder zweiten definierten Bedienposition vorhanden, an der der Fahrersitz (6) oder ein mit diesem zusammen verstellbares Element anschlägt, wenn der Fahrersitz (6) seine definierte erste und/oder definierte zweite Bedienposition erreicht hat;
- es ist für jede der ersten und zweiten definierten Bedienposition jeweils ein Anschlag (13A, 13B) vorhanden, wobei der die ersten Bedienposition festlegende Anschlag (13A) aus dem Verstellweg des Fahrersitzes (6) in Richtung von der ersten definierten Bedienposition in Richtung zur zweiten definierten Bedienposition vom Fahrer, insbesondere manuell, entfernbar oder lösbar ist;
- der die definierte erste Bedienposition festlegende Anschlag (13A) ist ortsfest zu einem zwischen einer Schließposition und einer Öffnungsposition verstellbaren Seitenfenster (11) der Tandemwalze (1) angeordnet;
- der die definierte zweite Bedienposition festlegende Anschlag (13B) wird durch den maximalen Stellweg der Verstelleinrichtung (13) des Fahrersitzes (6) und/oder einen Seitenwandanschlag gebildet;
- es ist wenigstens eine optische Markierung in einer Fahrerkabine (2) vorhanden, die dem Fahrer das Erreichen der definierten ersten und/oder zweiten Bedienposition anzeigt.

11. Tandemwalze (1) nach einem der vorhergehenden Ansprüche,
**dadurch gekennzeichnet,**
**dass** eine Zuordnungshilfe, insbesondere innerhalb des Fahrstandes, vorhanden ist, die dem im Fahrersitz (6) befindlichen Bediener anzeigt, welche der wenigstens zwei Peilungsmarkierungen (22, 23) welcher der definierten ersten und/oder zweiten Bedienposition zugeordnet ist.

12. Tandemwalze (1) nach einem der vorhergehenden Ansprüche,
**dadurch gekennzeichnet,**
**dass** sie wenigstens eine weitere Peilungsmarkierung (27) aufweist, die der Schneidkante eines Kantenschneidgerätes zugeordnet ist, insbesondere ausschließlich für den in der zweiten Bedienposition befindlichen Fahrersitz (6).

## Claims

1. A tandem roller (1) for compacting an underlying ground, comprising
- a machine frame (3)supported by a front compaction drum (5a) with respect to a direction of travel (VR, RR) and a front compaction drum (5b) with respect to the direction of travel, the front compaction drum (5b) being spaced apart from the front compaction drum (5a) in a longitudinal machine direction (A), and
- an operator platform with a driver's seat (6) oriented in the direction of travel (VR, RR), the driver's seat (6) being displaceable by means of an adjusting device from an operating position at a center (M) of the operator platform with respect to the horizontal extension of the operator platform transverse to a forward direction (VR) in the direction of at least one side of the tandem roller (1) transversely to the longitudinal machine direction (A) to at least one defined first operating position and in the same direction to the side to at least one defined second operating position, the defined second operating position being spaced farther apart from the center (M) of the operator platform than the defined first operating position, wherein in the first and in the second defined operating position of the driver's seat (6) an operator sitting in the driver's seat (6) looks in each case in the direction of the direction of travel (VR, RR),
**characterized in that**
the tandem roller (1) has at least two direction finding aids (22, 23), the at least two direction finding aids (22, 23) being arranged offset from each other in a projection to a common virtual horizontal plane, the first direction finding aid (22) being associated with the defined first operating position and the second direction finding aid (23) being associated with the defined second operating position, such that the first direction finding aid (22) for an operator sitting in the driver's seat (6) located in the first operating position and the second direction finding aid (23) for the operator sitting in the driver's seat (6) located in the second operating position each indicate a ground point (B1) in line-of-sight extension from the driver's seat (6), which, viewed parallel to the direction of travel, is in each case located in linear extension of the end-face ground contact point of that end face of the compaction drum (5a, 5b) located at the front in the direction of travel which is located in the direction of the adjustment direction of the driver's seat (6) from the defined first operating position in the direction of the second defined operating position of the driver's seat (6), and that the at least two direction finding aids (22, 23) are arranged permanently and stationary on the machine frame (3).

2. The tandem roller (1) according to claim 1,
**characterized in that**
the at least two direction finding aids (22, 23), from a perspective of the operator sitting on the driver's seat (6) in the longitudinal machine direction (A), emerge on a visual edge (SK) of the tandem roller (1) at a front in a straight-ahead direction of travel and/or extend to said visual edge (SK), in particular of a crossbeam (25).

3. The tandem roller (1) according to any one of the preceding claims,
**characterized in that**
the at least two direction finding aids (22, 23) are formed by the machine frame (3).

4. The tandem roller (1) according to any one of the preceding claims,
**characterized in that**
from a perspective of the operator sitting on the driver's seat, the at least two direction finding aids (22, 23) are arranged in line-of-sight extension from the driver's seat (6) in the direction of travel (VR, RR) in front of the operator, preferably in front of the front windshield, particularly preferably in front of a horizontal rotation axis of the compaction drum, and most preferably at least at the visual edge of the tandem roller (1).

5. The tandem roller (1) according to any one of the preceding claims,
**characterized in that**
at least one of the two direction finding aids (22, 23) has a linearly extending bearing line starting from an eye point (AP) of the driver and emerging from the machine environment immediately adjacent thereto.

6. The tandem roller (1) according to claim 5,
**characterized in that**
the two direction finding aids (22, 23) each have a respective bearing line, the bearing lines running at an angle, in particular an angle of less than 5°, to one another when projected into a common virtual horizontal plane.

7. The tandem roller (1) according to any one of the preceding claims,
**characterized in that**
at least one, and in particular both, of the at least two direction finding aids (22, 23) have at least one of the following features:
- it is distinguished from the machine region adjacent to the respective direction finding aid by an elevation and/or notch;
- it comprises a j oint, in particular a joint with a joint widening;
- it has a chromatic contrast relative to the machine region adjacent to the respective direction finding aid, in particular by means of a sticker and/or a colored paint mark;
- it is part of at least one opening penetrating the outer surface of the tandem roller, in particular in the region of a crossbeam for mounting one of the compaction drums;
- it is part of a material thickening and/or material recess;
- it is part of an access opening, in particular to a drum sprinkling device and/or a stripping device.

8. The tandem roller (1) according to any one of the preceding claims,
**characterized in that**
an alignment device (13) is provided which defines a positioning of the driver's seat (6) in the defined first operating position and/or in the defined second operating position.

9. The tandem roller (1) according to claim 8,
**characterized in that**
the alignment aid (13) comprises a device configured to output at least one haptic and/or optical and/or acoustic signal when the driver's seat (6) has reached the defined first operating position and/or the defined second operating position.

10. The tandem roller (1) according to any one of claims 8 or 9,
**characterized in that**
the alignment aid (13) comprises at least one of the following features:
- a stop (13A, 13B) is provided in the adjustment path of the driver's seat (6) from the center in the direction of the first and/or second defined operating position, against which the driver's seat (6) or an element adjustable together with the driver's seat (6) abuts when the driver's seat (6) has reached its defined first and/or defined second operating position;
- a respective stop (13A, 13B) is provided for each of the first and second defined operating positions, wherein the stop (13A) defining the first operating position is removable or releasable by the driver, in particular manually, from the adjustment path of the driver's seat (6) in the direction from the first defined operating position toward the second defined operating position;
- the stop (13A) defining the defined first operating position is arranged stationary with respect to a side window (11) of the tandem roller (1) adjustable between a closed position and an open position;
- the stop (13B) defining the defined second operating position is formed by the maximum adjustment path of the adjusting device (13) of the driver's seat (6) and/or by a sidewall stop;
- at least one optical mark is provided in the driver's cab (2) to indicate to the driver that the defined first and/or second operating position has been reached.

11. The tandem roller (1) according to any one of the preceding claims,
**characterized in that**
an associating aid is provided, in particular on the operator platform, which indicates to the operator in the driver's seat (6) which of the at least two direction finding aids (22, 23) is associated with which of the defined first and/or second operating positions.

12. The tandem roller (1) according to any one of the preceding claims,
**characterized in that**
it has at least one further direction finding aid (27), which is associated with the cutting edge of an edge cutter, in particular exclusively for the driver's seat (6) located in the second operating position.

## Revendications

1. Rouleau tandem (1) pour le compactage d'une fondation dans le sol comprenant
- un châssis de machine (3) supporté par un tablier de compactage avant (5a) par rapport à un sens de conduite (VR, RR) et un tablier de compactage arrière (5b) par rapport au sens de conduite, dans lequel le tablier de compactage arrière (5b) est espacé du tablier de compactage avant (5a) dans un sens longitudinal de machine (A) et
- un poste de conduite comportant un siège de conducteur (6) orienté dans le sens de conduite (VR, RR), dans lequel le siège de conducteur (6) peut être déplacé à l'aide d'un appareil de réglage d'un centre (M) du poste de conduite, par rapport à l'extension horizontale du poste de conduite transversalement à un sens de marche avant (VR), à partir d'une position de commande vue en direction d'au moins un côté du rouleau tandem (1) transversalement au sens longitudinal de machine (A) vers au moins une première position de commande définie et dans le même sens vers le côté vers au moins une seconde position de commande définie, dans lequel la seconde position de commande définie est plus éloignée que la première position de commande définie du centre (M) du poste de conduite, dans lequel un opérateur assis dans le siège de conducteur (6) regarde dans la première et dans la seconde position de commande du siège de conducteur (6) respectivement en direction du sens de conduite (VR, RR),
**caractérisé en ce que**
le rouleau tandem (1) présente au moins deux marques de repérage (22, 23), dans lequel les au moins deux marques de repérage (22, 23) sont disposées décalées l'une de l'autre lors d'une projection dans un plan horizontal virtuel commun, dans lequel la première marque de repérage (22) est attribuée à la première position de commande définie et la seconde marque de repérage (23) est attribuée à la seconde position de commande définie, de telle sorte que la première marque de repérage (22), pour un opérateur assis dans le siège de conducteur (6) se trouvant dans la première position de commande, et la seconde marque de repérage (23), pour l'opérateur assis dans le siège de conducteur (6) se trouvant dans la seconde position de commande, indiquent respectivement un point au sol (B1) dans le prolongement du regard depuis le siège de conducteur (6), qui, vu parallèlement au sens de conduite, se trouve respectivement dans le prolongement linéaire vers le point d'appui frontal au sol de la face frontale respective du tablier de compactage (5a, 5b) avant dans le sens de conduite, qui est localisé en direction du sens de réglage du siège de conducteur (6) de la première position de commande définie en direction de la seconde position de commande définie du siège de conducteur (6) et que les au moins deux marques de repérage (22, 23) sont disposées de manière fixe en permanence sur le châssis de machine (3).

2. Rouleau tandem (1) selon la revendication 1,
**caractérisé en ce**
**que** les au moins deux marques de repérage (22, 23) se dessinent, dans une perspective de l'opérateur assis sur le siège de conducteur (6) dans le sens longitudinal de machine (A) sur un bord visible (SK) du rouleau tandem (1) situé à l'avant dans un sens de conduite en ligne droite et/ou s'étendent jusqu'à ce bord visible (SK), en particulier une traverse (25).

3. Rouleau tandem (1) selon l'une des revendications précédentes,
**caractérisé en ce que** les au moins deux marques de repérage (22, 23) sont formées par le châssis de machine (3).

4. Rouleau tandem (1) selon l'une des revendications précédentes,
**caractérisé en ce**
**que** les au moins deux marques de repérage (22, 23) sont disposées, dans une perspective de l'opérateur assis sur le siège de conducteur (6), dans le prolongement du regard depuis le siège de conducteur (6) dans le sens de conduite (VR, RR) devant l'opérateur, de préférence devant le disque avant, de manière particulièrement préférée devant un axe de rotation horizontal du tablier de compactage (5a, 5b) et de manière tout à fait préférée au moins sur le bord visible (SK) du rouleau tandem (1).

5. Rouleau tandem (1) selon l'une des revendications précédentes,
**caractérisé en ce**
**que** au moins une des marques de repérage (22, 23) présente une droite de repérage partant d'un point oculaire (AP) du conducteur, s'étendant linéairement, se détachant de l'environnement de la machine qui s'y raccorde directement.

6. Rouleau tandem (1) selon la revendication 5,
**caractérisé en ce**
**que** les deux marques de repérage (22, 23) présentent respectivement une droite de repérage, dans lequel les droites de repérage s'étendent, lors d'une projection dans un plan horizontal virtuel commun, selon un angle l'une par rapport à l'autre, en particulier inférieur à 5 °.

7. Rouleau tandem (1) selon l'une des revendications précédentes,
**caractérisé en ce**
**qu'**au moins une et en particulier les au moins deux marques de repérage (22, 23) présentent au moins une des caractéristiques suivantes :
- elle se dessine par une élévation et/ou une encoche par rapport à la zone de machine adjacente à chaque marque de repérage ;
- elle comprend un joint, en particulier un joint comportant un élargissement de joint ;
- elle présente un contraste de couleur par rapport à la zone de machine adjacente à la marque de repérage (22, 23) respective, en particulier à l'aide d'un autocollant et/ou d'une marque de peinture colorée ;
- elle fait partie d'au moins une ouverture traversant la surface extérieure du rouleau tandem (1), en particulier dans la zone d'une traverse (25) pour le support d'un des tabliers de compactage (5a, 5b) ;
- elle fait partie d'une surépaisseur de matériau et/ou d'un évidement de matériau ;
- elle fait partie d'une ouverture d'accès, en particulier à un appareil d'arrosage de tabliers et/ou à un appareil de raclage.

8. Rouleau tandem (1) selon l'une des revendications précédentes, **caractérisé en ce qu'**une aide à l'alignement (13) est disponible, qui détermine un positionnement du siège de conducteur (6) dans la première position de commande définie et/ou dans la seconde position de commande définie.

9. Rouleau tandem (1) selon la revendication 8, **caractérisé en ce que** l'aide à l'alignement (13) comprend un appareil, qui est conçu pour l'émission d'au moins un signal haptique et/ou optique et/ou acoustique, lorsque le siège de conducteur (6) a atteint la première position de commande définie et/ou la seconde position de commande définie.

10. Rouleau tandem (1) selon l'une des revendications 8 ou 9,
**caractérisé en ce**
**que** l'aide à l'alignement (13) comprend au moins l'une des caractéristiques suivantes :
- il existe une butée (13A, 13B) dans la course de réglage du siège de conducteur (6) du centre en direction de la première et/ou la seconde position de commande définie, sur laquelle le siège de conducteur (6) ou un élément réglable conjointement avec celui-ci vient en butée, lorsque le siège de conducteur (6) a atteint sa première et/ou seconde position de commande définie ;
- il existe pour chacune de la première et de la seconde position de commande définie respectivement une butée (13A, 13B), dans lequel la butée (13A) déterminant la première position de commande peut être retirée ou détachée par le conducteur, en particulier manuellement, de la course de réglage du siège de conducteur (6) dans la direction de la première position de commande définie en direction de la seconde position de commande définie ;
- la butée (13A) déterminant la première position de commande définie est disposée fixe par rapport à une fenêtre latérale (11) du rouleau tandem (1), réglable entre une position de fermeture et une position d'ouverture ;
- la butée (13B) déterminant la seconde position de commande définie est formée par la course de réglage maximale de l'appareil de réglage (13) du siège de conducteur (6) et/ou une butée de paroi latérale ;
- il existe au moins une marque optique dans une cabine de conducteur (2), qui indique au conducteur l'atteinte de la première et/ou la seconde position de commande définie.

11. Rouleau tandem (1) selon l'une des revendications précédentes, **caractérisé en ce**
**qu'**il existe une aide à l'attribution, en particulier à l'intérieur du poste de conduite, qui indique à l'opérateur se trouvant dans le siège de conducteur (6), laquelle des au moins deux marques de repérage (22, 23) est attribuée à laquelle de la première et/ou de la seconde position de commande définie.

12. Rouleau tandem (1) selon l'une des revendications précédentes, **caractérisé en ce**
**qu'**il présente au moins une autre marque de repérage (27), qui est attribuée au bord de coupe d'un appareil de coupe de bordures, en particulier exclusivement pour le siège de conducteur (6) se trouvant dans la seconde position de commande.
